# EUROPÄISCHE PATENTANMELDUNG

(11) **EP 0 838 281 A1**
(43) Veröffentlichungstag der Anmeldung: **29.04.1998**
(21) Anmeldenummer: 96102236.5
(22) Anmeldetag: 02.05.1996
(51) Int. Cl.: B21D 43/05

(54) **Vorrichtung zum Transfer von Werkstücken durch eine Folge von Bearbeitungsstationen**

(71) Anmelder: SCHULER PRESSEN GmbH & Co., 73033 Göppingen (DE)
(72) Erfinder: Thudium, Karl, D-73116 Wäschenbeuren (DE); Rieger, Walter, D-73037 Göppingen (DE)

(57) **Zusammenfassung**

Eine Vorrichtung dient zum Transfer von Werkstücken durch eine Folge von Bearbeitungsstationen einer Presse, eines Simulators oder dergleichen Bearbeitungs- oder Einrichtmaschine mit zwei parallel im Abstand zueinander, sich in Transportrichtung erstreckenden, längsgeteilten Transportschienen, an deren jeweils einem Längsteil, der gegenüber dem anderen Längsteil vermittels Linearmotoren-Prinzip beweglich ist, Aufnahmeeinrichtungen zum Aufnehmen der Werkstücke vorgesehen sind. Die Transportschienen sind insgesamt mit den Aufnahmeeinrichtungen mit Hilfe von weiteren Antriebseinrichtungen vertikal auf und ab und horizontal aufeinanderzu bewegbar. Die Antriebseinrichtungen für die Bewegungen in den drei Bewegungsachsen sind als paarweise angeordnete Linearmotoren ausgefürt, wobei die sich bezüglich der Mittellängsachse der Presse, des Simulators oder dergleichen Bearbeitungs- oder Einrichtmaschine gegenüberliegenden Linearmotoren synchron ansteuerbar sind.

## Beschreibung

Die Erfindung betrifft eine Vorrichtung zum Transfer von Werkstücken durch eine Folge von Bearbeitungsstationen einer Presse, eines Simulators oder dergleichen Bearbeitungs- oder Einrichtmaschine mit zwei parallel im Abstand zueinander angeordneten, sich in Transportrichtung erstreckenden, längsgeteilten Transportschienen, an deren jeweils einem Längsteil, der gegenüber dem anderen Längsteil vermittels Linearmotoren-Prinzip beweglich ist, Aufnahmeeinrichtungen zum Aufnehmen der Werkstücke vorgesehen sind, wobei die Transportschienen insgesamt mit Hilfe von weiteren Antriebseinrichtungen vertikal auf und ab und gegebenenfalls horizontal aufeinanderzu bewegbar sind.

Aus der Praxis sind derartige Vorrichtungen zum Transfer von Werkstücken bekannt. Hierbei werden die Transportschienen beispielsweise von Elektromotoren bekannter Bauart oder auch wenigstens teilweise von Hydraulik- oder Pneumatikzylindern in drei Bewegungsachsen angetrieben.

Aus der US-A-4,887,446 ist eine Vorrichtung zum Transfer von Werkstücken durch eine Anzahl von hintereinander angeordneten und räumlich voneinander getrennten Bearbeitungsstationen bekannt, bei welcher der Antrieb von in sich längsgeteilten Transportschienen in vertikaler Richtung sowie quer zur Durchlaufrichtung der Werkstücke in diesen beiden Bewegungsachsen mittels Elektromotoren oder Hydraulikzylindern erfolgt, während Aufnahmeeinrichtungen zur Aufnahme der Werkstücke an jeweils einem der Teilstücke der längsgeteilten Transportschienen befestigt sind und mit dieser gegenüber dem jeweils anderen der Teilstücke mittels Linearmotoren in einer dritten Bewegungsachse bewegt werden.

Nachteilig an den Vorrichtungen des Standes der Technik ist jedoch, daß bekannte Elektromotoren relativ schwer sind, so daß auch die Summe aller bewegten Massen an der Presse, dem Simulator oder dergleichen Bearbeitungs- oder Einrichtmaschine verhältnismäßig groß ist, was dazu führt, daß die einzelnen Bauteile der Vorrichtung zum Transfer von Werkstücken sehr stabil sein müssen, wodurch sich der weitere Nachteil ergibt, daß die Transfervorrichtung wenig flexibel und wenig auf andere Werkstück- und Transportverhältnisse anpassbar ist.

Ein weiterer Nachteil besteht in der Notwendigkeit, Übertragungseinrichtungen zum Übertragen des von den Elektromotoren erzeugten Drehmomentes an die Aufnahmeeinrichtungen vorzusehen.

Der vorliegenden Erfindung liegt daher die Aufgabe zugrunde, die beschriebenen Nachteile des Standes der Technik zu beseitigen, insbesondere eine Vorrichtung zum Transfer von Werkstücken durch eine Folge von Bearbeitungsstationen einer Presse, eines Simulators oder dergleichen Bearbeitungs- oder Einrichtmaschine vorzusehen, mit der einerseits während des Transfers geringere Massen zu bewegen sind, wobei von den Aufnahmeeinrichtungen andererseits eine vorgegebene bzw. vorhandene Bewegungsmotorik zum Tausch bzw. Wechsel der Aufnahmeeinrichtungen nutzbar ist.

Erfindungsgemäß wird diese Aufgabe dadurch gelöst, daß die Antriebseinrichtungen für die Bewegungen in den drei Bewegungsachsen als paarweise angeordnete Linearmotoren ausgeführt sind, wobei die sich bezüglich der Mittellängsachse der Presse, des Simulators oder dergleichen Bearbeitungs- oder Einrichtmaschine gegenüberliegenden Linearmotoren synchron ansteuerbar sind.

Durch das Vorsehen von Linearmotoren für alle Bewegungsrichtungen der Transportschienen bzw. der Aufnahmeeinrichtungen zum Aufnehmen der Werkstücke, also Bewegungen in vertikaler Richtung sowie horizontal in Längsrichtung der Transportschienen und horizontal aufeinanderzu, kann auf die Verwendung bekannter Elektromotoren und/oder Hydraulikzylinder für den Antrieb der Transportschienen verzichtet werden, so daß alle hiermit einhergehenden Nachteile nicht mehr auftreten.

Insbesondere führt die vorgeschlagene Lösung zu einer beträchtlichen Gewichtseinsparung der im Transfer zu bewegenden Massen. Es kann sowohl auf die Elektromotoren bzw. Hydraulikzylinder als auch auf die Übertragungselemente zum Übertragen der von den Elektromotoren erzeugten Drehmomente bzw. der von den Hydraulikzylindern erzeugten Kraft auf die jeweiligen Baugruppen der Vorrichtung zum Transfer von Werkstücken verzichtet werden. Weiterhin wesentlich ist, daß die Aufnahmeeinrichtungen in den Vor- und Rückbewegungen Zwischenstops ausführen können und daß das Transfersystem bei Verwendung von z.B. Saugerbalken als Aufnahmeeinrichtungen in den zwei Achsenrichtungen Heben/Senken und Transfer/Rückbewegen beaufschlagbar ist.

Vorteilhafte Ausgestaltungen und Weiterbildungen der Erfindung ergeben sich aus den Unteransprüchen sowie aus den nachfolgend anhand der Zeichnung prinzipmäßig beschriebenen Ausführungsbeispielen.

Es zeigt:
- Fig. 1: schematisch eine Anordnung dreier senkrecht zueinander stehender Linearmotoren,
- Fig. 2a: eine dreidimensionale Ansicht eines Ausführungsbeispiels der vorliegenden Erfindung, wobei die einzelnen Aufnahmeeinrichtungen in Gebrauchsposition dargestellt sind,
- Fig. 2b: eine Ansicht ähnlich der Fig. 2a, wobei die Aufnahmeeinrichtungen in Auswechselstellung dargestellt sind,
- Fig. 3: eine Ansicht einer Presse in Durchlaufrichtung,
- Fig. 4: einen Schnitt entlang der Linie IV-IV der Fig. 3, und
- Fig. 5: eine dreidimensionale Ansicht eines zweiten Ausführungsbeispiels der vorliegenden Erfindung.

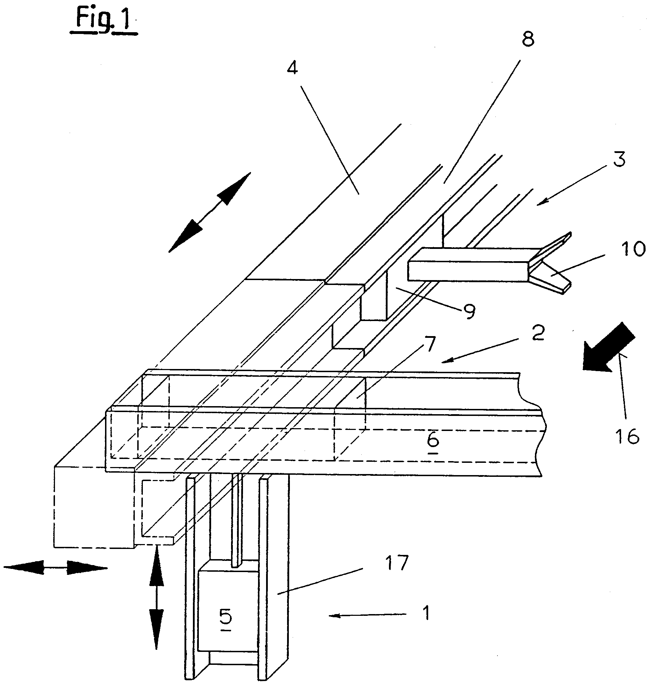

Bezugnehmend auf Fig. 1 ist schematisch eine Anordnung dreier Linearmotoren 1, 2, 3 dargestellt, die jeweils ein Primär- und ein Sekundärteil aufweisen, wobei mittels des Linearmotors 1 eine Transportschiene 4 in vertikaler Richtung und mittels des Linearmotors 2 die Transportschiene 4 in horizontaler Richtung quer zur Durchlaufrichtung (Pfeil 16) der Werkstücke bewegt werden kann. Das Primärteil des Linearmotorensystems wird gebildet durch einen vertikal orientierten Träger 17. Das Sekundärteil 5 des Linearmotors 1 ist als Wagen oder Schlitten ausgebildet und wirkt hierbei auf eine Traverse 6 ein, welche als Primärteil des Linearmotors 2 ausgebildet ist. Alternativ kann auf die Traverse 6 jedoch auch das Primärteil des Linearmotors 2 aufgesetzt sein, d.h. die Traverse 6 und das Primärteil des Linearmotors 2 sind als separate Bauteile ausgeführt.

Das Primärteil und das Sekundärteil jedes der nachfolgend noch zu beschreibenden Linearmotoren sind jeweils vertauschbar, d.h. das Primärteil, also das die Motorwicklung tragende Teil, kann von den anderen Bauteilen des Prinzips gebildet oder in diese integriert sein. In Abhängigkeit von der Energiezuführung ist die eine oder die andere Lösung zu wählen.

Das Sekundärteil 7 des Linearmotors 2 ist ebenfalls als Wagen oder Schlitten ausgeführt und ist mit der Transportschiene 4 verbunden, an welcher wiederum das schienenartige Primärteil 8 des Linearmotors 3 angebracht ist, so daß die Transportschienen 4 und die daran angebrachten Primärteile 8 quasi eine Einheit bilden.

Auf dem Sekundärteil 9 des Linearmotors 3, das gleichfalls als Wagen oder als Schlitten ausgeführt ist, sind bekannte Aufnahmeeinrichtungen 10 für nicht dargestellte Werkstücke angebracht, wobei in der Darstellung nach der Fig. 1 die Aufnahmeeinrichtungen als Greifzeuge 10 ausgeführt sind, die an dem Wagen bzw. Schlitten als Primärteil 9 austauschbar befestigt sind.

Das Sekundärteil 9 des Linearmotors 3 und das Primärteil 8 des Linearmotors 3 bilden somit zwei gegeneinander bewegliche bzw. verschiebbare Längsteile.

Es ist auch daran gedacht, anstelle der Sekundärteile der Linearmotoren 3 ein zu transportierendes Werkstück, wie ein Blech oder eine Platine, zu verwenden.

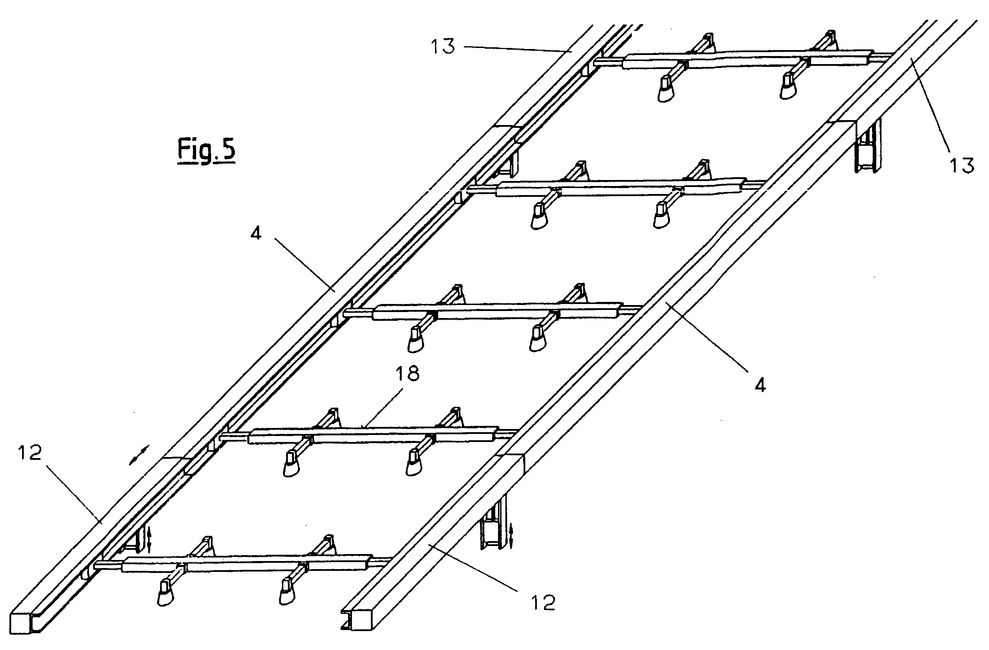

Durch die dargestellte Anordnung der Linearmotoren 1, 2, 3 in senkrecht zueinander liegenden Wirkungsrichtungen kann auf einfache Art und Weise eine dreidimensionale Bewegung der Greifzeuge 10 realisiert werden, so daß auf diese Art und Weise ein problemloser Transport von Werkstücken durch eine Presse, einen Simulator oder dergleichen Bearbeitungs- oder Einrichtmaschine möglich ist. Bei Verwendung von Quertraversen 18 (s. Fig. 5) für einen Saugerbetrieb, also für ein Festhalten der Blechteile durch Saugnäpfe, wobei die Quertraversen an gegenüberliegenden Wagen bzw. Schlitten durch Kupplungsmaßnahmen angeordnet sind, ist nur ein zweidimensionaler Antrieb erforderlich.

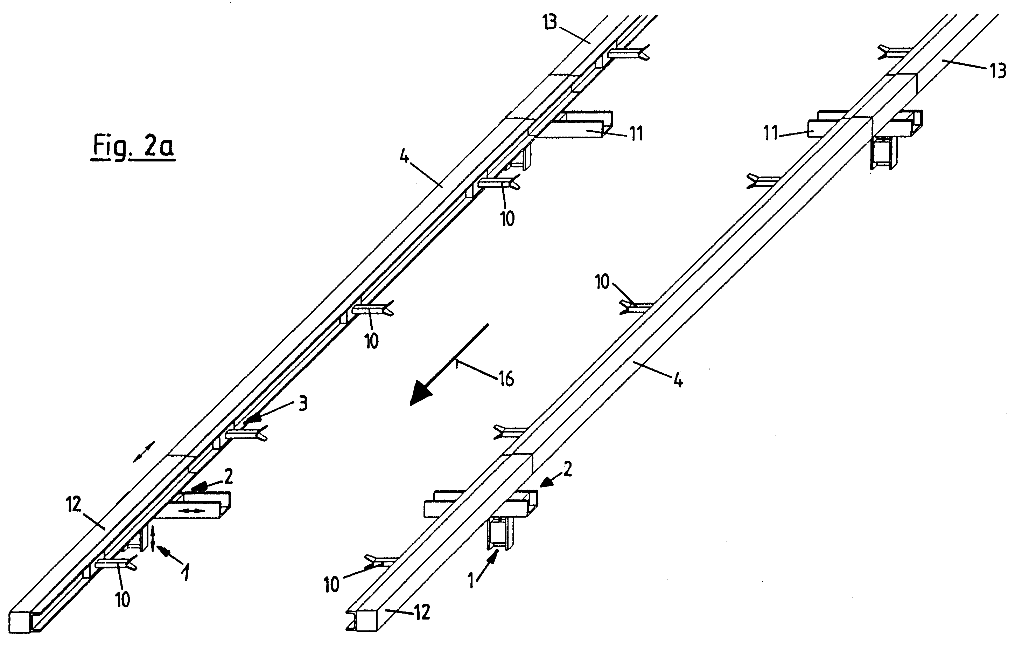

Fig. 2a zeigt in dreidimensionaler Ansicht eine Anordnung mit zwei parallel zueinander verlaufenden Transportschienen 4, wie dies üblicherweise in Transfersystemen für Pressen, Simulatoren und dergleichen Bearbeitungs- und Einrichtmaschinen üblich ist. Die als Greifzeuge 10 ausgeführten Aufnahmeeinrichtungen sind in der Darstellung nach der Fig. 2a in Gebrauchsstellung dargestellt, also über die in einzelne Bereiche 4, 12, 18 unterteilten Transportschienen verteilt.

Die Transportschienen 4, 12, 13 insgesamt sind hierbei mittels der jeweils paarweise angeordneten Linearmotoren 1 und 2 in vertikaler Richtung und horizontal aufeinanderzu bewegbar.

Mittels der an den Transportschienen 4, 12, 13 angebrachten Linearmotoren 3 können nicht dargestellte Werkstücke, die von wenigstens einem Paar einander gegenüberliegender Aufnahmeeinrichtungen 10 aufgenommen werden, horizontal in Durchlaufrichtung (Pfeil 16) bewegt werden. Es versteht sich, daß die Aufnahmeeinrichtungen 10 vermittels der Linearmotorsysteme in die jeweilige Ausgangsstellung, in der Werkstücke der Vorstufe zu entnehmen sind, zurückbewegt/zurückgesetzt werden.

Die Transportschienen 4, 12, 13 sind parallel zur Mittellängsachse der Presse, des Simulators oder dergleichen Bearbeitungs- oder Einrichtmaschine angeordnet, während die Linearmotoren 1, 2, 3 jeweils paarweise symmetrisch zur genannten Mittellängsachse vorgesehen sind.

Die bereits im Zusammenhang mit der Fig. 1 erwähnte Traverse, auf welcher das Paar Linearmotoren 2 für eine Bewegung der Transportschienen 4 aufeinanderzu angebracht ist, kann entweder geteilt sein, wie dies in der Fig. 2a durch die Bezugszeichen 11 gekennzeichnet ist, oder sie kann selbstverständlich auch durchgehend ausgeführt sein. Durch die geteilte Ausführungsform der Traverse ergibt sich der Vorteil, daß zwischen der geteilten Traverse 11 ausreichend Platz auch für größere oder z.B. tiefgezogene zu transportierende Werkstücke vorhanden ist.

Die Transportschienen 4 können aus verschiedenen Einzelschienen 4, 12, 13, also längsgeteilten Einzelschienen, zusammengesetzt sein. Selbstverständlich ist es jedoch auch möglich, die Transportschienen 4 einstückig zu fertigen, wodurch sich jedoch aufgrund der Größe der Transportschienen 4 Probleme bei der Montage derselben ergeben können. Die Primärteile 8 wären zu teilen und unabhängig von den Transportschienen 4 auszutauschen.

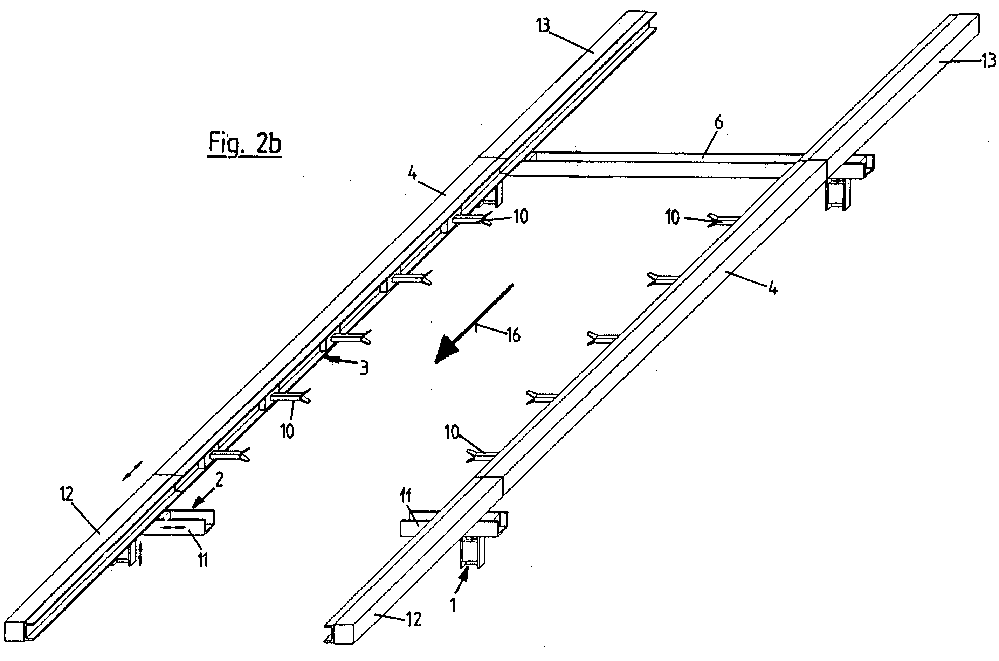

Fig. 2b zeigt die Greifzeuge 10, die bereits im Zusammenhang mit der Fig. 2 abgeschrieben wurden, in Auswechselstellung, d.h. sämtliche Greifzeuge 10 wurden jeweils in den Bereich 4 der Transportschiene verfahren, der beispielsweise auf einem Schiebetisch der Presse angeordnet bzw. ablegbar ist und somit aus der Presse herausgefahren werden kann. Auf diese Weise können die Greifzeuge 10 auf schnelle Art und Weise ausgewechselt werden.

Es soll auch darauf hingewiesen werden, daß in der Ansicht nach der Fig. 2b eine der Traversen als durchgehende Traverse 6 dargestellt ist.

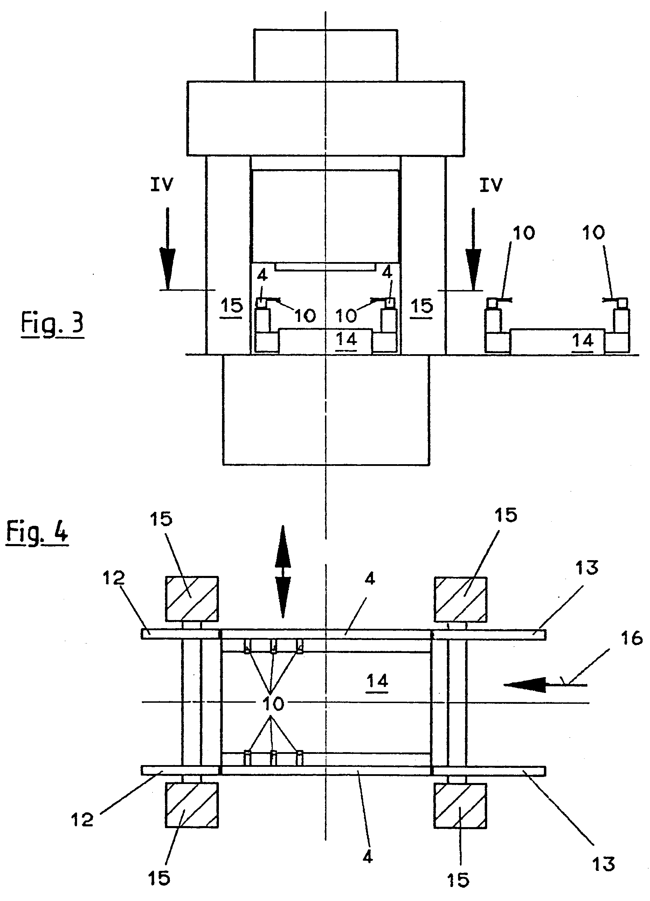

Die Figuren 3 und 4 zeigen jeweils eine Vorderansicht und einen Schnitt durch eine Presse, welche mit geteilten Transportschienen 4, 12, 13 versehen ist.

Die Einzelschienen 4 der Transportschienen sind hierbei auf einem Schiebetisch 14 abgesteckt/abgelegt, welcher zwischen Säulen 15 der Presse quer zur Durchlaufrichtung 16 der Werkstücke herausfahrbar ist. Die Einzelschienen 4, also die schiebetischseitigen Einzelschienen, weisen hierbei eine Länge auf, die geringer als die lichte Weite zwischen zwei Ständern 15 der Presse in Förderrichtung ist.

Sollen nun beispielsweise die Aufnahmeeinrichtungen 10 zum Aufnehmen der Werkstücke in der gesamten Presse ausgetauscht werden, so können die einzelnen Greifzeuge 10 in den Bereich der Transportschiene 4 verfahren werden, um mit den Einzelschienen 4 vermittels Schiebetisch 14 ausgetauscht zu werden. Befinden sich alle Aufnahmeeinrichtungen 10 in dem genannten Bereich, so sind die Einzelschienen 4 auf dem Schiebetisch 14 abzulegen und vermittels dieser aus der Presse zu verfahren und es wird ein zweiter Schiebetisch, welcher parallel zu dem ersten Schiebetisch 14 angeordnet ist, durch die Säulen 15 in die Presse gefahren, wobei sich auf dem zweiten Schiebetisch die auf ein neues Werkstück eingerichteten Aufnahmeeinrichtungen 10 befinden. Befindet sich der zweite, zuvor eingerichtete Schiebetisch dann innerhalb der Presse, so können die neuen Aufnahmeeinrichtungen 10 beispielsweise in die Bereiche 12 und 13 der Transportschiene verfahren werden, also in ihre für die Aufnahme der Werkstücke vorgesehene Position. Die Normierung in diesen Positionen und der Transfer erfolgt elektrisch bzw. elektronisch gesteuert bzw. geregelt. Auf diese Art und Weise können problemlos und sehr schnell sämtliche Aufnahmeeinrichtungen, oder, falls dies notwendig ist, auch nur ein Teil derselben ausgewechselt bzw. aus der Presse entfernt werden.

Die Gesamttransportschiene, die beispielsweise aus den Einzelschienen 4, 12, 13 besteht, erstreckt sich durch die gesamte Presse oder Anlage. Die Transportschienen 4 weisen vorzugsweise eine Länge auf, die, wie bereits erwähnt, im wesentlichen dem Abstand der Ständer 15 der Presse, des Simulators oder dergleichen Bearbeitungs- oder Einrichtmaschine entspricht bzw. kürzer als der Abstand zwischen zwei Ständern 15 ist.

Durch die beschriebene Anordnung ergibt sich der Vorteil, daß auch Änderungen des Vorschubweges für die einzelnen Werkstücke, beispielsweise wenn andere Werkstücke gefertigt werden sollen, relativ einfach zu realisieren sind, da die einzelnen Aufnahmeeinrichtungen einfach entsprechend an den Transportschienen 4, 12, 13 neu positioniert werden können bzw. es können problemlos und sehr schnell zusätzliche Aufnahmeeinrichtungen auf die Transportschienen 4, 12, 13 eingesetzt bzw. aufgesetzt werden, wobei jede einzelne Aufnahmeeinrichtung 10 diskret angesteuert werden kann und wobei außerdem die Möglichkeit besteht, daß die einzelnen Aufnahmeeinrichtungen 10 jeweils unterschiedliche Wege zurücklegen können. Auch die Positionen entlang den Bereichen der Transportschiene 4, 12, 13 der einzelnen Aufnahmeeinrichtungen 10 können individuell verändert bzw. eingestellt werden.

Fig. 5 zeigt ein weiteres Ausführungsbeispiel der Erfindung, das im wesentlichen dem in Zusammenhang mit den Fig. 2a, 2b beschriebenen Ausführungsbeispiel entspricht. Allerdings werden anstatt der Greifzeuge 10 Quertraversen 18 verwendet, die sich zwischen den parallel verlaufenden Transportschienen 4, 12, 13 erstrecken.

Auch die Quertraversen 18 können selbstverständlich z.B. in den Bereich der Einzelschienen 4 verfahren werden, wie dies im Zusammenhang mit der Beschreibung der Fig. 2a und 2b näher erläutert wurde. Auch die dort beschriebenen konstruktiven Merkmale können selbstverständlich auf das Ausführungsbeispiel nach der Fig. 5 angewandt werden.

## Patentansprüche

1. Vorrichtung zum Transfer von Werkstücken durch eine Folge von Bearbeitungsstationen einer Presse, eines Simulators oder dergleichen Bearbeitungs- oder Einrichtmaschine mit zwei parallel im Abstand zueinander, sich in Transportrichtung erstreckenden, längsgeteilten Transportschienen, an deren jeweils einem Längsteil, der gegenüber dem anderen Längsteil vermittels Linearmotoren-Prinzip beweglich ist, Aufnahmeeinrichtungen zum Aufnehmen der Werkstücke vorgesehen sind, wobei die Transportschienen insgesamt mit den Aufnahmeeinrichtungen mit Hilfe von weiteren Antriebseinrichtungen vertikal auf und ab und horizontal aufeinanderzu bewegbar sind, **dadurch gekennzeichnet,** daß die Antriebseinrichtungen für die Bewegungen in den drei Bewegungsachsen als paarweise angeordnete Linearmotoren (1,2,3), ausgeführt sind, wobei die sich bezüglich der Mittellängsachse der Presse, des Simulators oder dergleichen Bearbeitungs- oder Einrichtmaschine gegenüberliegenden Linearmotoren (1,2,3) synchron ansteuerbar sind.

2. Vorrichtung nach Anspruch 1,
**dadurch gekennzeichnet,** daß wenigstens ein Paar Linearmotoren (1) für den Antrieb der Transportschienen (4) in vertikaler Richtung auf quer zur Durchlaufrichtung der Presse, des Simulators oder dergleichen Bearbeitungs- oder Einrichtmaschine verlaufende Traversen (6,11) einwirkt, auf welchen die Transportschienen (4) gelagert sind, wobei das Paar Linearmotoren (1) gebildet ist durch jeweils einen vertikal orientierten Träger (17) als Primärteil und einen an diesem gelagerten, die Traversen (6,11) abstützenden Sekundärteil (5).

3. Vorrichtung nach Anspruch 2,
**dadurch gekennzeichnet,** daß auf den Traversen (6,11) jeweils wenigstens ein Paar Linearmotoren (2) für die Bewegung der Transportschienen (4) horizontal aufeinanderzu angebracht ist, wobei das Paar Linearmotoren (1) gebildet ist durch die jeweilige Traverse (6,11) als Primärteil und einen die Transportschiene (4) abstützenden Sekundärteil (7).

4. Vorrichtung nach Anspruch 2 oder 3,
**dadurch gekennzeichnet,** daß wenigstens ein Paar sich bezüglich der Mittellängsachse der Presse, des Simulators oder dergleichen Bearbeitungs- oder Einrichtmaschine gegenüberliegender Linearmotoren (3) für eine Bewegung der Werkstücke in Durchlaufrichtung auf den Transportschienen (4) angebracht ist, mit jeweils einem schienenartigen, sich in Richtung der Tragschienen (4) erstreckenden Primärteil (8) und einem an diesem verfahrbaren, Aufnahmeeinrichtungen (10) aufweisenden Sekundärteil (9).

5. Vorrichtung nach einem der Ansprüche 1 bis 4,
**dadurch gekennzeichnet**, daß die Transportschienen (4) und die mit diesen integralen Primärteile (8) in mehrere Bereiche (4,12, 13) unterteilt sind, wobei wenigstens ein Bereich (4) eine Länge aufweist, die kleiner ist als der Abstand der Ständer (15) der Presse, des Simulators oder dergleichen Bearbeitungs- oder Einrichtmaschine.

6. Vorrichtung nach Anspruch 5,
**dadurch gekennzeichnet,** daß die Transportschienen (4) von Schiebetischen (14) aufnehmbar sind, die quer zur Durchlaufrichtung durch die Presse, den Simulator oder dergleichen Bearbeitungs- oder Einrichtmaschine zwischen den Ständern der Presse, des Simulators oder dergleichen Bearbeitungs- oder Einrichtmaschine bewegbar sind.

7. Vorrichtung nach Anspruch 1 und 6,
**dadurch gekennzeichnet,** daß die Aufnahmeeinrichtungen (10) auf den Einzelschienen (12,13) zum Herausführen in den Bereich der schiebetischseitigen Einzelschienen (4) verfahrbar sind.
